Europäisches Patentamt

European Patent Office

Office européen des brevets

(11) Publication number: **0 294 918 B1**

# EUROPEAN PATENT SPECIFICATION

(45) Date of publication of patent specification: **11.05.94**   (51) Int. Cl.⁵: **G05D 3/20**, F15B 21/08

(21) Application number: **88302519.9**

(22) Date of filing: **22.03.88**

(54) **Electro-hydraulic servo systems.**

(30) Priority: **12.06.87 US 62279**

(43) Date of publication of application:
**14.12.88 Bulletin 88/50**

(45) Publication of the grant of the patent:
**11.05.94 Bulletin 94/19**

(84) Designated Contracting States:
**DE ES FR GB IT SE**

(56) References cited:
**EP-A- 0 042 960**
**EP-A- 0 047 853**
**US-A- 4 089 494**

**HYDRAULIC & PNEUMATICS vol.32,no.6,June 1979,pages 61-66,US industrial publishing corp. Cleveland,Ohio,USA;R.H.Maskrey:"Possible uses of microprocessors for fluid power"**

**JOURNAL OF PHYSICS E/SCIENTIFIC INSTRUMENTS vol.19,no.11,November 1986,pages 907-910,Woodbury,NY,USA;G.L.TJOA et al.:"A remote-controlled calibration device for displacement transducers"**

(73) Proprietor: **INTERNATIONAL CONTROL AUTOMATION FINANCE S.A.**
**16 Rue des Bains**
**Ville de Luxembourg(LU)**

(72) Inventor: **Benson, Richard Eugene**
**9579 Graystone Road**
**Mentor Ohio 44060(US)**
Inventor: **Shaw, Scott M.**
**1839 Sample Road**
**Allison Park Pennsylvania 15101(US)**
Inventor: **Gavrilos, Andrew D.**
**1081 McAllister Drive**
**New Kensington Pennsylvania 15068(US)**
Inventor: **Spafford, Joel Wade**
**1317 West 104 Street**
**Cleveland Ohio 44102(US)**
Inventor: **Rand, Robert Samuel**
**310 Fairfield Road**
**Painesville Ohio 44077(US)**
Inventor: **Walko, Ronald J.**
**RD 3, Box 48D**
**Ford City Pennsylvania 16226(US)**

(74) Representative: **Cotter, Ivan John et al**
**D. YOUNG & CO.**
**21 New Fetter Lane**
**London EC4A 1DA (GB)**

## Description

This invention relates to apparatus for determining and/or controlling the position of a driven servo device and more particularly to an electro-hydraulic positioning system.

Electro-hydraulic systems are used extensively for the positioning of control valves or other servo devices requiring high thrust and rapid, accurate positioning. For example, US patent number US-A-4089494 discloses such a system in which a load is moved by a hydraulic actuator under control of an electro-hydraulic servo valve. The position of the load is sensed by a linear voltage differential transformer driven by an oscillator.

Such systems must be calibrated periodically to ensure proper operation thereof and accurate positioning of the controlled device. Typically, to achieve satisfactory system calibration, the controlled device must be manually positioned to predetermined positions while various control circuit parameters are manually adjusted. Since the control circuitry is usually remotely located relative to the controlled device, several persons and a communication network are required to complete the calibration process. In addition, in some instances the calibration adjustments are interdependent, resulting in a time consuming, iterative calibration process. And, lastly, the resulting potentiometer settings, etc., resulting from the calibration process are subject to shifting due to vibration, contact creep, potentiometer aging, etc., all of which can result in inaccurate positioning of the controlled device.

Because of the foregoing, it has become desirable to develop an electro-hydraulic positioning system which can be automatically calibrated.

European patent application number EP-A-0042960 discloses a calibration system for a robot in which the robot is moved to a set of nominal positions (eg positions commanded by a robot controller), and independent measuring means are used to determine the associated actual positions. The nominal positions and actual positions are stored in separate memories and are then analysed by a data reduction unit to derive an error relationship between the two sets of positions. The error relationship may be stored in an error memory as a look-up table where a nominal position is stored for each possible desired actual position. On receipt of an input actual position request, the robot controller then accesses the error memory to obtain the corresponding nominal position to be used to drive the robot. While this provides an automatic calibration system, the system is undesirably complex.

According to the invention there is provided an electro-hydraulic servo system having automatic calibration capabilities and having the ability to move a driven device towards a desired position for the driven device, the system comprising: position determining means for determining the present position of the driven device; microcontroller means for actuating the driven device through an automatic calibration sequence by ramping the driven device to its 100% mechanical limit and to its 0% mechanical limit to obtain calibration data $P_{100}$ and $P_0$ corresponding to the determined position of the driven device at each limit; memory means for storing said calibration data; microprocessor means for accessing said calibration data from the memory means, the microprocessor means being configured to determine from an input desired position demand a % position demand representing the desired position as a percentage of the distance between the 0% and 100% mechanical limits, and to calculate a new position demand according to the relationship:

$$\text{new position demand} = \frac{(\text{\% position demand}) (P_{100} - P_0)}{100} + P_0;$$

means for producing an output signal when a difference exists between said determined present position of the driven device and the new position demand, and means responsive to said output signal to cause the driven device to move towards the desired position of the driven device.

A preferred electro-hydraulic positioning system described in detail below solves the problems associated with the previously proposed systems by providing a microprocessor which controls the flow of data to and from a non-volatile memory apparatus within the electro-hydraulic positioning system. The memory apparatus, in the form of a known integrated circuit semiconductive chip, is used for storing calibration parameters which are determined when the system is placed in a calibration mode of operation. The microprocessor controls the overall system operation by adjusting the position demand of a servo driven device according to the calibration parameters stored in the memory apparatus to arrive at a new position demand for the servo driven device. In addition, monitoring of system variables and reporting of deviations from expected values, including fault conditions, for same are readily accomplished through the use of a microcontroller. The microcontroller reports the condition of variables of the system to the microprocessor.

The invention will now be further described, by way of illustrative and non-limiting example, with reference to the accompanying drawings, in which:

Figure 1 is a schematic view of a previously proposed electro-hydraulic system for positioning a driven servo device; and

Figure 2 is a schematic view of an electro-hydraulic positioning system according to a preferred embodiment of the invention.

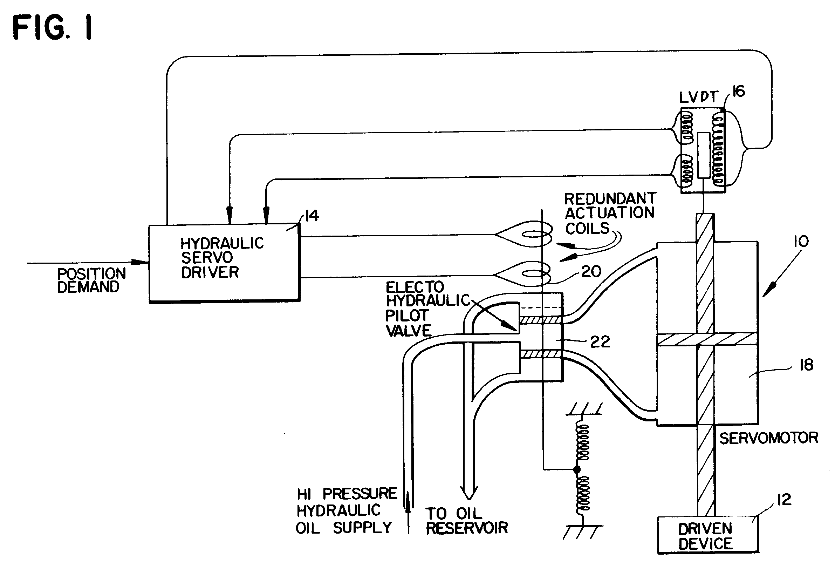

Figure 1 is a schematic view of a previously proposed electro-hydraulic system 10 for positioning a servo driven device 12, such as a steam turbine control valve or another device requiring high thrust and rapid, accurate positioning thereof. The system 10 includes a hydraulic servo driver 14 which receives a signal representative of position demand from an operator request or from another control device (not shown). The hydraulic servo driver 14 provides an excitation voltage for a linear voltage differential transformer (LVDT) 16 which is operatively connected to the servo driven device 12 by means of a servo motor (piston) 18 connected therebetween. Outputs of the linear voltage differential transformer 16 are connected to inputs to the hydraulic servo driver 14, permitting the servo driver 14 to compare the position demand with the actual position of the servo driven device 12 and to produce an output signal when a difference in position exists therebetween. When such a difference in position exists, an output signal produced by the hydraulic servo driver 14 is applied to a pair of coils 20 associated with an electro-hydraulic pilot valve 22 which regulates the flow of high pressure hydraulic oil to the servo motor 18. Actuation of the coils 20 causes the pilot valve 22 to shift from a neutral position thereof, allowing the high pressure hydraulic oil to flow from an oil supply (not shown) through the pilot valve 22 into one end of the servo motor 18 and oil to drain from the other end of the servo motor 18 through the pilot valve 22 to an oil reservoir (not shown). The foregoing hydraulic oil flow causes the piston of the servo motor 18 to move in a direction to reduce the difference between the position demand and the actual position of the servo driven device 12. As the difference between the position demand and the actual position of the servo driven device 12 decreases, the hydraulic servo driver 14 reduces the current flow to the coils 20 associated with the electro-hydraulic pilot valve 22. When the difference between the position demand and the actual position of the servo driven device 12 becomes zero, the electro-hydraulic pilot valve 22 returns to its neutral position, terminating further hydraulic flow to or from the servo motor 18 and locking the servo driven device 12 at the correct position.

The system 10 typically utilises conventional analog circuitry to control the electro-hydraulic pilot valve 22. Such circuitry contains numerous jumpers and potentiometers which are used to calibrate the position feedback signal produced by the linear voltage differential transformer 16. To achieve satisfactory system calibration requires the servo driven device 12 to be manually positioned to predetermined positions while the circuit parameters are adjusted. Since the circuitry is typically mounted away from the servo driven device 12 and a control room, the calibration process usually requires three or more people working together through a communication network. In many instances the calibration adjustments are interdependent, requiring an iterative calibration process that is very time-consuming. In addition, the resulting potentiometer settings are subject to shifting due to vibration, contact creep, potentiometer aging, etc.

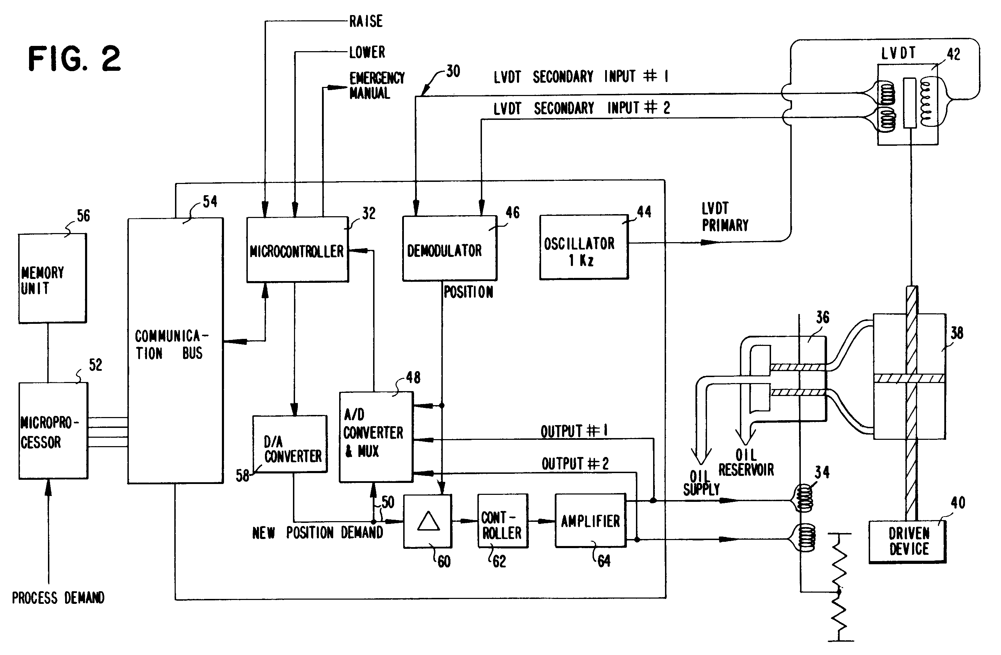

Figure 2 is a schematic view of an electro-hydraulic positioning system 30 embodying the invention, which uses a microcontroller 32 to control the actuation of coils 34 associated with an electro-hydraulic pilot valve 36 which, in turn, controls the flow of hydraulic oil to a hydraulic servo driver 38 connected to a servo driven device 40. The microcontroller 32 is a known digital integrated circuit chip made up of semiconductor circuitry comprising a central processing unit (CPU), read only memory (ROM), and random access memory (RAM). The chip is used to execute a self contained computer program that performs a small set of specific tasks. The actual position of the servo driven device 40 is determined by a linear voltage differential transformer (LVDT) 42 which has a primary which receives an excitation voltage from an oscillator 44. Outputs of secondaries of the linear voltage differential transformer 42 are connected to inputs of a demodulator 46 which produces a signal representative of the actual position of the servo driven device 40. This signal representative of the actual position of the servo driven device 40 is applied to an input of a multiplexer and analog to digital (A/D) converter 48. Signals representative of position demand from along a line 50 and current through the coils 34 are also applied to the multiplexer and A/D converter 48. The multiplexer and A/D converter 48 converts these three (analog) signals to digital signals which are applied to the microcontroller 32. The microcontroller 32 monitors the signals representative of the actual position of the servo driven device 40 and the current through the coils 34 and reports deviations from expected values therefor to a microprocessor 52 over a parallel communication bus 54. The microprocessor 52 is a known digital integrated circuit chip made up of semiconductor circuitry comprising a central processing unit. The microprocessor 52 is a general purpose computing device which can be used to perform a wide variety of tasks. In the present system, the microprocessor 52 receives signals for present position demand from known external circuitry controlling an overall process and calculates a new position demand using previously obtained calibration parameters stored in a non-volatile memory unit 56. The microprocessor 52 then transmits a signal representative of new position demand to the microcontroller 32 over the communication bus 54. It should be noted that the automatic operation of the microprocessor 52 will be overridden if the microcontroller 32 does not receive a new position demand from the microprocessor 52 over the communication bus 54 within a preset time. The microcontroller 32 then reverts to and indicates an emergency manual mode wherein the servo driven device 40 can be manually controlled by actuation of raise and lower and manual inputs to the microcontroller 32. In any event, a digital to analog (D/A) converter 58 converts the signal representative of new position demand to an analog signal which is applied via the line 50 to a difference unit 60 along with the signal from the demodulator 46 indicative of the actual position of the servo driven device 40. The difference unit 60 determines the difference between the actual position of the servo driven device 40 and the new position demand and sends a correction signal to eliminate this difference to a controller 62. The controller 62 produces an output which is amplified by an amplifier 64 and outputs of the amplifier 64 are applied to the coils 34 associated with the electro-hydraulic pilot valve 36.

One of the functions of the microcontroller 32 is to perform a system calibration cycle when required. Such a calibration cycle would include the following steps:

a) Ramping the servo driven device 40 to a 100% mechanical position limit thereof.

b) Storing the so-determined measured position as $P_{100}$ in the microcontroller 32 and sending the measured position $P_{100}$ over the communication bus 54 to the microprocessor 52 which in turn stores the position in the non-volatile memory unit 56.

c) Ramping the servo driven device 40 to a 0% mechanical position limit thereof.

d) Storing the so-determined measured position as $P_0$ in the microcontroller 32 and sending the measured position $P_0$ over the communication bus 54 to the microprocessor 52 which in turn stores the position in the non-volatile unit 56.

e) Ramping the servo driven device 40 back to its original position demand.

With the calibration constants $P_0$ and $P_{100}$ so stored within the non-volatile memory unit 56, the actual position demand for the servo driven device 40 can be determined by the microprocessor 52 from the following relationship:

$$\text{New Position Demand} = \frac{(\% \text{ position demand})(P_{100} - P_0)}{100} + P_0$$

Thus, calibration can be easily effected and, once effected, can be used to control the position of the servo driven device 40 to produce the desired demand.

The foregoing system and method for system calibration and operation provides numerous advantages over previously proposed systems. The present arrangement permits automatic system calibration and greatly reduces the time and manpower required therefor. Since calibration time is significantly reduced, the servo driven device is out of service for a much shorter period of time than when calibration of a previously proposed system is being undertaken. In addition, calibration of the present system does not require any test equipment, thus eliminating the associated expense and any errors which can be introduced by test equipment. Since the calibration parameters are determined and stored in the non-volatile memory unit 56, the hydraulic servo driver 38 can be readily replaced, If required, and the calibration parameters can be down-loaded such that a calibration cycle is not required for the new device. This advantage applies to any element of the system which may malfunction and need replacement and is not limited to the hydraulic servo driver 38. By storing the calibration parameters in the non-volatile memory unit 56, errors due to vibration, contact creep, and potentiometer aging are eliminated, and calibration shifts resulting from unauthorised tampering can be detected and corrected. And, lastly, the use of the microcontroller 32 provides for automatic system fault detection: that is, the microcontroller 32 monitors signals indicative of actual position of the driven servo device 40, the position demand, and the current through the actuation coils 34 associated with the electro-hydraulic pilot valve 36, and reports when these variables exceed certain limits.

## Claims

1. An electro-hydraulic servo system having automatic calibration capabilities and having the ability to move a driven device (40) towards a desired position for the driven device, the system comprising:

position determining means (42) for determining the present position of the driven device (40); microcontroller means (32) for actuating the driven device (40) through an automatic calibration sequence by ramping the driven device (40) to its 100% mechanical limit and to its 0% mechanical limit to obtain calibration data $P_{100}$ and $P_0$ corresponding to the determined position of the driven device (40) at each limit; memory means (56) for storing said calibration data; microprocessor means (52) for accessing said calibration data from the memory means (56), the microprocessor means (52) being configured to determine from an input desired position demand a % position demand representing the desired position as a percentage of the distance between the 0% and 100% mechanical limits, and to calculate a new position demand according to the relationship:

$$\text{new position demand} = \frac{(\% \text{ position demand}) (P_{100} - P_0)}{100} + P_0;$$

means (60) for producing an output signal when a difference exists between said determined present position of the driven device (40) and the new position demand; and means (62, 64, 34, 36, 38) responsive to said output signal to cause the driven device (40) to move towards the desired position of the driven device.

2. A system according to claim 1, wherein the means (62, 64, 34, 36, 38) responsive to said output signal includes valve means (36) operative to control the movement of the driven device (40).

3. A system according to claim 2, wherein the valve means (36) is operatively connected to the driven device (40).

4. A system according to claim 1, claim 2 or claim 3, wherein the position determining means (42) is a linear voltage differential transformer (42).

5. A system according to claim 4, including means (44) for producing an excitation voltage for the linear voltage differential transformer (42).

6. A system according to claim 5, wherein the excitation voltage producing means (44) is an oscillator.

7. A system according to any one of the preceding claims, wherein the memory means (56) is a non-volatile memory unit.

**Patentansprüche**

1. Elektrohydraulischer Servoantrieb mit der Möglichkeit der automatischen Kalibrierung und mit der Fähigkeit, eine angetriebene Einrichtung (40) auf eine gewünschte Position für die angetriebene Einrichtung zu bewegen, wobei das System folgendes aufweist: Einrichtungen (42) zur Ermittlung der augenblicklichen Position der angetriebenen Einrichtung (40); eine Mikrocontrollereinrichtung (32) zur Bewegung der angetriebenen Einrichtung (40) durch eine automatische Kalibriersequenz, indem die angetriebene Einrichtung (40) auf ihre mechanische 100%-Endposition und auf ihre mechanische 0%-Endposition gefahren wird, um die Kalibrierdaten $P_{100}$ und $P_0$ zu erhalten, die der festgelegten Position der angetriebenen Einrichtung (40) an jedem Endpunkt entsprechen; Speichereinrichtungen (56) zur Speicherung dieser Kalibrierdaten; Mikroprozessoreinrichtungen (52) für den Zugriff auf diese Daten aus den Speichereinrichtungen (56), wobei die Mikroprozessoreinrichtung (52) dahingehend ausgelegt ist, daß sie aus einer eingegebenen gewünschten geforderten Position eine prozentuale geforderte Position bzw. Positionsanforderung bestimmt, die die gewünschte Position darstellt als einen Prozentanteil der Entfernung zwischen den mechanischen 0% und 100%-Endpunkten und daß sie eine neue geforderte Position gemäß folgender Beziehung berechnet:

$$\text{neue Positionsanforderung} = \frac{(\text{prozentuale Positionsanforderung})(P_{100} - P_0)}{100} + P_0,$$

Einrichtungen (60) zur Erzeugung eines Ausgangssignals, wenn ein Unterschied besteht zwischen der ermittelten augenblicklichen Position der angetriebenen Einrichtung (40) und der neuen geforderten Position; und Einrichtungen (62, 64, 34, 36, 38), die auf dieses Ausgangssignal antworten können, um zu bewirken, daß die angetriebene Einrichtung (40) sich in Richtung auf die gewünschte Position der angetriebenen Einrichtung bewegt.

2. Einrichtung nach Anspruch 1, bei der die Einrichtungen (62, 64, 34, 36, 38), die auf dieses Ausgangssignal antworten können, Ventileinrichtungen (36) beinhalten, die dahingehend wirken, daß sie die Bewegung der angetriebenen Einrichtung (40) steuern.

3. Einrichtung nach Anspruch 2, bei der die Ventileinrichtungen (36) wirksam mit der angetriebenen Einrichtung (40) verbunden sind.

4. Einrichtung nach Anspruch 1, Anspruch 2 oder Anspruch 3, bei der die Einrichtungen (42) zur Ermittlung der Position aus einem linearen Spannungsdifferentialübertrager (42) bestehen.

5. Einrichtung nach Anspruch 4 mit Einrichtungen (44) zur Erzeugung einer Erregungsspannung für den linearen Spannungsdifferentialübertrager (42).

6. Einrichtung nach Anspruch 5, bei der die Einrichtung (44) zur Erzeugung der Erregungsspannung ein Oszillator ist.

7. Einrichtung nach einem der vorhergehenden Ansprüche, bei der die Speichereinrichtung (56) eine nicht löschbare bzw. permanente Speichereinheit ist.

**Revendications**

1. Système asservi électro-hydraulique comportant des possibilités de calibrage automatique et pouvant déplacer un dispositif entraîné (40) en direction d'une position souhaitée pour le dispositif entraîné, le système comprenant : un moyen de détermination de position (42) pour déterminer la position actuelle du dispositif entraîné (40) ; un moyen microrégisseur (32) pour actionner le dispositif entraîné (40) à l'aide d'une séquence de calibrage automatique en amenant le dispositif entraîné (40) à sa limite mécanique 100 % et à sa limite mécanique 0 % pour obtenir des données de calibrage $P_{100}$ et $P_0$ correspondant à la position déterminée du dispositif entraîné (40) à chaque limite ; un moyen de mémorisation (56) pour mémoriser lesdites données de calibrage ; un moyen microprocesseur (52) pour accéder auxdites données de calibrage à partir dudit moyen de mémorisation (56), le moyen microprocesseur (52) étant conformé pour déterminer à partir d'une demande de position souhaitée d'entrée une demande de position en % représentant la position souhaitée sous forme d'un pourcentage de la distance entre les limites mécaniques de 0 % et de 100 %, et pour calculer une nouvelle demande de position en fonction de la relation :

$$\text{nouvelle demande de position} = \frac{(\% \text{ demande de position}) (P_{100} - P_0)}{100} + P_0 ;$$

un moyen de production (60) pour produire un signal de sortie lorsqu'il existe une différence entre ladite position présente déterminée du dispositif entraîné et la nouvelle demande de position ; et un moyen (62, 64, 34, 36, 38) sensible audit signal de sortie pour amener le dispositif entraîné (40) à se déplacer en direction de la position souhaitée pour le dispositif entraîné.

2. Système selon la revendication 1, dans lequel le moyen (62, 64, 34, 36, 38) sensible audit signal de sortie comprend un moyen formant soupape (36) servant à commander le déplacement du dispositif entraîné (40).

3. Système selon la revendication 2, dans lequel le moyen formant soupape (36) est raccordé de manière fonctionnelle au dispositif entraîné (40).

**4.** Système selon la revendication 1, la revendication 2, ou la revendication 3, dans lequel le moyen de détermination de position (42) est un transformateur différentiel de tension linéaire (42).

**5.** Système selon la revendication 4, incluant un moyen (44) pour produire une tension d'excitation pour le transformateur différentiel de tension linéaire (42).

**6.** Système selon la revendication 5, dans lequel le moyen de production de tension d'excitation (44) est un oscillateur.

**7.** Système selon l'une quelconque des revendications précédentes, dans lequel le moyen de mémorisation (56) est un module de mémorisation non volatile.

# FIG. 1

POSITION DEMAND

HYDRAULIC SERVO DRIVER  14

REDUNDANT ACTUATION COILS

ELECTO HYDRAULIC PILOT VALVE

20

22

LVDT  16

10

18

SERVOMOTOR

HI PRESSURE HYDRAULIC OIL SUPPLY

TO OIL RESERVOIR

DRIVEN DEVICE  12

EP 0 294 918 B1

FIG. 2

EP 0 294 918 B1